# EUROPEAN PATENT SPECIFICATION

(11) **EP 1 046 294 B1**
(45) Date of publication and mention of the grant of the patent: **26.05.2004**
(21) Application number: 99902971.3
(22) Date of filing: 05.01.1999
(51) Int. Cl.: H04N 7/16, H04N 5/445

(54) **ASSOCIATING WEB SITES TO TELEVISION PROGRAMS**
VERKNÜPFUNG VON WEBSITES MIT FERNSEHPROGRAMMEN
ASSOCIATION DE SITES WEB A DES PROGRAMMES DE TELEVISION

(30) Priority: 05.01.1998 US 2593
(43) Date of publication of application: 25.10.2000
(73) Proprietor: Amiga Development LLC, North Sioux City, SD 57049 (US)
(72) Inventor: WUGOFSKI, Theodore, D., Fort Worth, TX 76109 (US); SMITH, Kim, C., Colleyville, TX 76034 (US)
(74) Representative: Beresford, Keith Denis Lewis
(86) International application number: PCT/US1999/000116
(87) International publication number: WO 1999/035845

(56) References cited:
- WO-A-97/13368
- WO-A-97/33434
- WO-A-97/49237
- "WEBTV NETWORKS INTRODUCES REVOLUTIONARY NEXT-GENERATION SYSTEM" RETRIEVED FROM THE INTERNET, 16 September 1997, pages 1-4, XP002101851 http://webtv.net/company/media_center/webt vplus.html

## Description

The present invention pertains to electronic program guides for televisions, particularly to electronic programming guides that include information about websites.

The home electronics industry, in the midst of an on-going convergence of televisions and computers, has produced a new class of products, known as PC-TV systems, or personal-computer-television systems. In their simplest form, these systems allow users to selectively switch between using a video monitor, or display, to watch television or to support computer activities, like word processing, creating spread sheets, playing computer games, or even surfing the world wide web. A seminal example, the Gateway Destination PC-TV system, from Gateway 2000, Inc., not only weds a television to a personal computer, but allows system expansion to receive programming from internal sources such as video-cassette recorders, laser-disc players, and video cameras and from external sources such as direct-broadcast-satellite receivers, etc.

With the growth in the number of video channels, particularly cable and satellite television channels, many PC-TV systems now include an electronic program guide - a database listing available television channels and their program schedules. In these systems, the electronic program guide (EPG) operates as a user-prompted menu system, which logically organizes and displays thousands of program options. Typically, the user uses a wireless remote control both to prompt display of the EPG and to select a program for viewing or recording. The user may also update contents of the program guide by downloading data from a remote data source.

Conventional EPGs, tailored for television systems, suffer from a common disadvantage which limits their usefulness in PC-TV systems. Specifically, they lack data about on-line computer services, such as websites, which are relevant to specific television or video programming. The failure of current EPGs to provide this data makes it awkward, and simply inconvenient, for users to access websites.

For example, television broadcasters such as ABC, CBS, NBC, and FOX maintain websites which provide specific information about their respective television programs. Also, television advertisers commonly show website addresses during commercials, encouraging interested viewers to seek more information about their advertised products. However, typical televisions lack the capacity to link to websites, leaving many interested viewers with the unattractive alternative of getting up to use their computers. Even in PC-TV systems that allow concurrent PC and TV usage, linking to these websites is cumbersome because PC-TV users still have to invoke their Internet browser software and then enter the address of the website to gain access.

In one limited solution, described in WO-A-97/33434. television broadcasters include their website address as part of the television signal, specifically within its vertical blanking interval (VBI). In some PG-TV systems, this allows automatic or selective linking to the website. However, the approach is limited because users have no control over what website addresses the broadcasters transmit.

Accordingly, there is not only a need for a system that provides data about websites generally, but also a need for a system that rotates this data to specific television programs.

WO-A-9713368 discloses a PCTV system which may be configured to automatically or manually customize the television schedule guide to an individual viewer. A remote control device can be operated to select programs or services in which the user is likely to be interested.

WO-A-9733434 describes providing computer service data by synching specific Internet pages to the video signal using the vertical blanking interval of the television broadcast signal.

WO-A-9749237 discloses broadcasting scheduling information from a distribution centre and creating an Internet database from broadcast commands that include URL's.

Also disclosed in "Webtv Networks Introduces Revolutionary Next-generation System", Retrieved From the Internet, 16 September 1997, pages 1-4 (http://webtv.net/company/media_center/webtvplus.html) is a system which embeds computer service data in a video broadcast and in which a receiver detects web links and data embedded in the broadcast and notifies viewers with an icon appearing on the television screen.

Aspects of the present invention are set out in the appended claims.

The preferred embodiment provides a system and method that enables users not only to establish a database of websites or other computer services. but to adaptively relate these websites and computer services to specific television programs.

Specifically, thesystem embodiment includes a receiver for receiving a sequence of scheduled programs; a database that relates data about a first website, or more broadly a computer service, to one scheduled program; and a display for displaying both the one scheduled program and the data about the first website. The data about the first website preferably includes a network address or telephone number for communicating with the first website, facilitating an option to communicate with the website while watching the television program.

The preferred embodiment enables a user to enter or change the website data, and even to relate or associate the website data to other scheduled programs. This feature allows the user to continually update or adapt the database to personal preferences.

Other embodiments and advantages of the invention will become apparent after considering the accompanying drawings and the following detailed description.

### Brief Description of the Drawings

- Figure 1: is a diagram of a PC-TV system incorporating the invention.
- Figure 2: is a table illustrating a data structure for an electronic-program-guide feature of the PC-TV system.
- Figure 3: is a table illustrating a data structure for a computer-services database feature of the PC-TV system.
- Figure 4: is a flowchart of a method incorporating the invention.
- Figure 5: is a facsimile of a display output during execution of the method of Figure 4.

### Detailed Description of the Preferred Embodiment

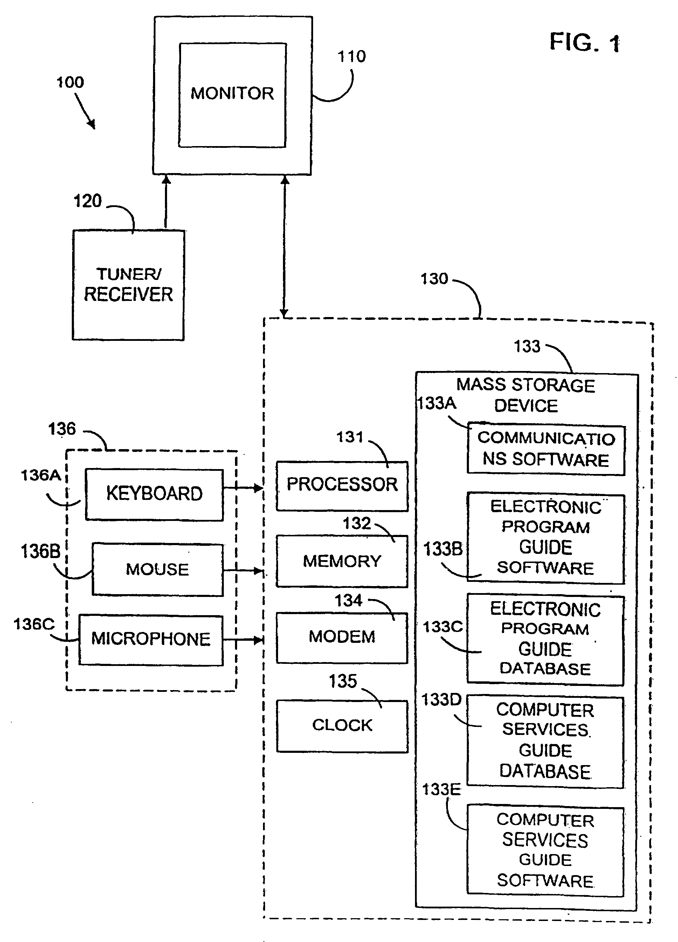

The following detailed description, which references and incorporates Figures 1-5, describes and illustrates specific embodiments of the invention. These embodiments, offered not to limit but only to exemplify and teach the invention, are shown and described in sufficient detail to enable those skilled in the art to practice the invention. Thus, where appropriate to avoid obscuring the invention, the description may omit certain information known to those of skill in the art.

Figure 1 shows a PC-TV ( or convergence) system 100 with a novel database which not only includes data about on-line computer services or websites, but also relates this data to specific channels and programs. Specifically, PC-TV system 100, which preferably incorporates all features of the Destination PC-TV system from Gateway 2000, Inc. of North Sioux City, South Dakota, includes a monitor 110, a tuner-receiver 120, and a personal computer 130.

Monitor 110, the heart of the system from a user perspective, displays video programming from tuner-receiver 120 or personal computer 130. Monitor 110 also includes built-in audio speakers (not shown) for outputting audible signals. In the preferred embodiment, the monitor provides a super-VGA display format.

Tuner-receiver 120 receives audio or video or digital data signals via direct connection or wireless coupling to a multi-channel programming source. Each channel carries a scheduled sequence of programs, or programming events. In the preferred embodiment, tuner-receiver 120 accepts cable television signals, local over-the-air broadcast signals, and direct satellite television signals, which carry video, audio, or digital data.

Personal computer 130, operatively coupled to monitor 110 and tuner-receiver 120, includes a processor 131, a local memory 132, a mass-data-storage device 133, a modem 134, a clock 135, and a set of user interface devices 136. Interface devices 136 include a keyboard 136A, a mouse or other pointing device 136B, and a microphone 136C, all of which support user interaction with a graphical user interface, preferably a version of Microsoft Windows.

Mass-data-storage device 133, which preferably includes a hard drive, stores executable communications software 133A, such as Netscape Navigator or Microsoft Internet Explorer, to communicate with remote computer systems, via the Internet or other computer network. When executed, this software causes computer 130 to operate a network communications device. Also, storage device 133 stores executable electronic program guide (EPG) software 133B, preferably Smart Guide software from Intel Corporation. This software allows program schedules to be updated through a direct-dial connection to a remote server. However, any functionally equivalent hardware, software, or firmware implementation of an electronic program guide will suffice.

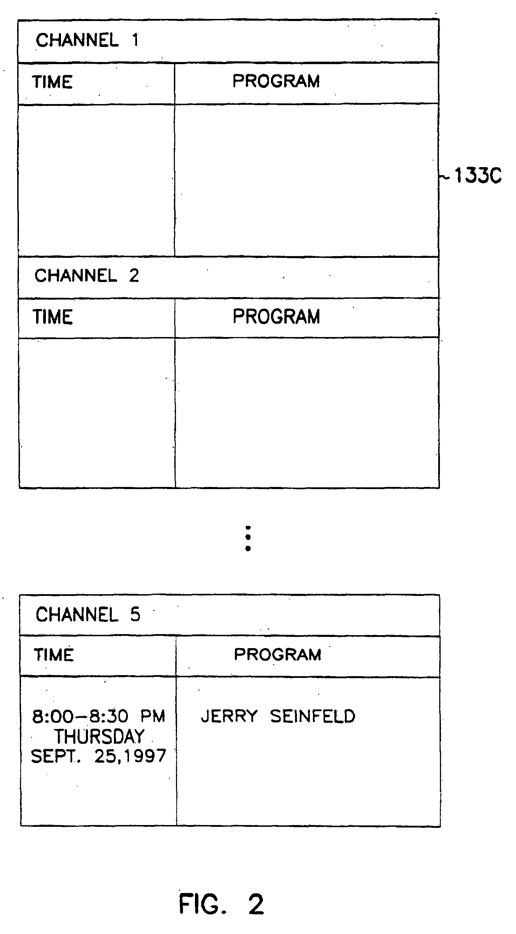

Additionally, storage device 133 stores an EPG database 133C and a computer-services database 133D. (Although these databases as shown and described as separate entities, databases 133C and 133D may be merged easily into a single comprehensive database.) EPG database 133C, which preferably contains programming schedules for most, if not all, currently-available cable and satellite television channels, cooperates with EPG software 133B to assist a user in finding and accessing relevant television programs. Figure 2 shows a preferred data structure of EPG database 133C.

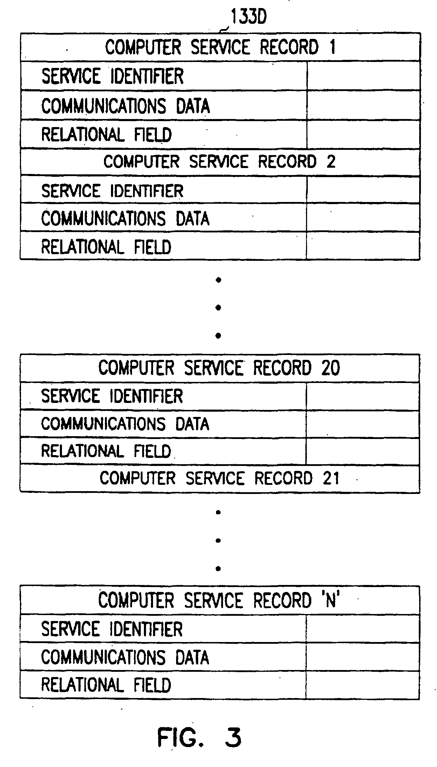

Computer-services database 133D logically relates information about a set of computer services, preferably networked computer services such as websites, to information about specific television channels or programs. In the preferred embodiment, database 133D includes a number of user-defined records, with each record corresponding to a computer service. Each record includes a computer-service identifier field which identifies the computer service, a communications data field which includes data, such as a URL address or telephone number, for linking to (or establishing communications with) the computer service, and a relational field which contains a set of program or channel identifiers. Figure 3 shows the preferred data structure of computer-services database 133D.

Storage device 133 includes a computer-readable storage medium, for example a, magnetic storage medium or electronic memory device, that stores executable, computer-service-guide software 133E which cooperates with monitor 110, tuner-receiver 120, computer 130, and computer-services database 133D to present users with options to link to computer services related to specific television channels or programs. Software 133E may operate within a broader software architecture which controls numerous other functions and services of PC-TV system 100.

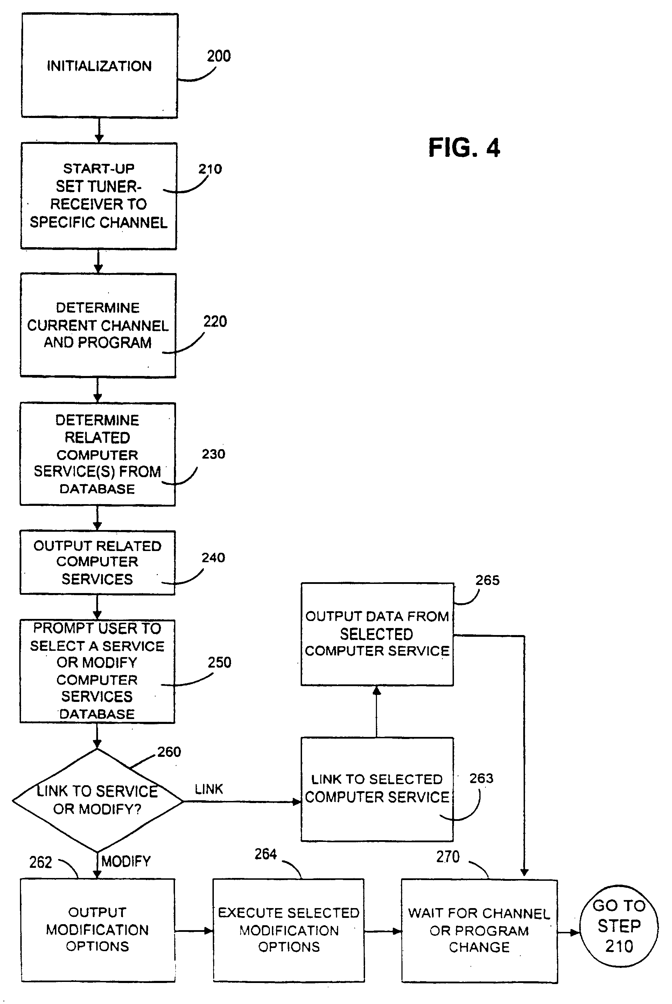

When executed, computer-services-guide software 133E causes system 100 to operate according to the preferred method illustrated in Figure 4. The method begins first with a system initialization at step 200. Initialization entails establishing the content of EPG database 133C and computer-service database 133D. preferably as shown in respective Figures 2 and 3.

At step 210, or start-up, a system user sets tuner-receiver 120 to receive a specific channel signal, which preferably carries a scheduled sequence of programs, or programming events, which monitor 110 displays. For example, the user may select channel 5 and receive a channel signal that carries a sequence of NBC television programs.

Step 220 entails determining the current channel and the current program received by tuner-receiver 120. In the preferred embodiment, computer 130 determines or identifies the current tuner channel. Then, using the current tuner channel and the current time (including date) from clock 135, computer 130 searches EPG database 133C to determine the current program. For example, if the current channel is channel 5 (NBC), and the time is 8 o'clock on a Thursday (1997), searching EPG database 133C (as illustrated in Figure 2) identifies the program as "Seinfeld," or program identifier XYZ.

Step 230 requires searching computer-services database 133D for references to the current program (or channel.) In the preferred embodiment, this entails searching the relational fields of the computer-service records for a program identifier matching the current program. Thus, for example, searching computer-services database 133D (as illustrated in Figure 3) yields three computer-services related to the current program, specifically www.Seinfel.d.com, www.NBC.com, and www.comedy.com.

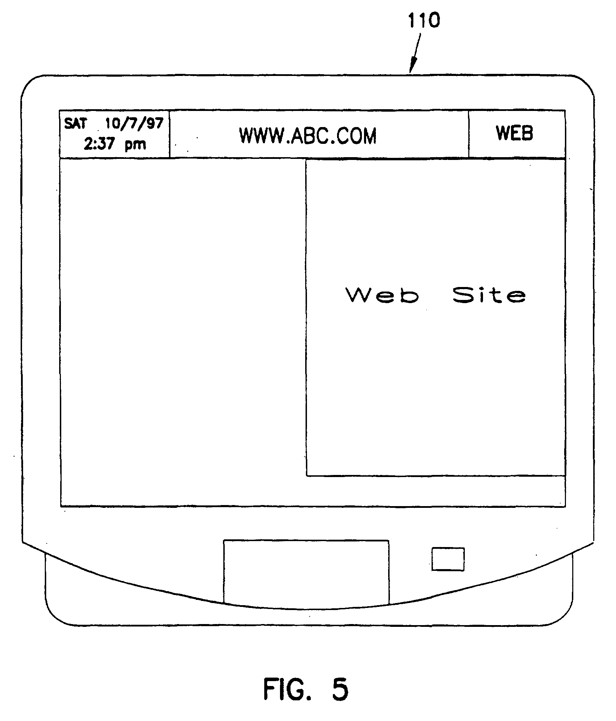

At step 240, monitor 110 displays the search results, preferably automatically within a small foreground website window while continuing to display the current program in the background. (Other arrangements such as displaying the website window and television program within non-overlapping windows or as foreground windows on another background are equally feasible.) If the search results indicate the computer-service database includes no related computer-services, the display will provide a message stating this. For the Seinfeld example, monitor 110 would display a website window similar to the one in Figure 5.

In step 250, the system prompts the system user to select a computer service from the results displayed in the website window. The user selects using one of the interface devices, such as keyboard 136A, pointing device 136B, or microphone 136C. The preferred embodiment provides an option to modify the contents of computer-services database 133D.

In step 260, the system responds to the user selection of step 250. If the user has selected a computer service, step 263 attempts to link with the selected computer service via communications software 133A and modem 134, using the communications data stored within the database record for the selected computer service. If linking is successful, at step 265, the system displays data from the computer service within the website window, allowing the system user to interact with the website or computer service while also watching the television program.

If the user has elected to modify the contents of computer-services database 133D, the system, performing step 262, presents options to add a computer service record, to modify the relational datafield portion of an existing computer-service record, or to completely delete a computer-service record. So, if a new channel, program, or computer service becomes available or if an existing one becomes unavailable, the user can modify the database accordingly. In step 264, the system executes the selected modification option.

The modification feature is particularly valuable because it allows the user to define and control the relevancy of websites or computer service to television programs. For instance, the user may decide that the website www.kellogs.com is relevant (or related) to the Seinfeld television program and add it to computer-services database 133D, with the appropriate program identifier in its relational field. On the other hand, the user may decide to delete a website or computer service previously related to the Seinfeld show.

In step 270, the system waits for the program to change, for the system user to change a channel, (or for the system user to deliberately invoke the website window with a specific command.) In either case, the system returns to start-up step 210 and repeats the method using an updated channel and time.

### Conclusion

The disclosed system and method of associating websites or other on-line computer services, to specific programming, such as television programs, overcomes a substantial obstacle to the seamless integration of personal computers and televisions. In particular, the method and system enable users not only to establish a database of websites or other computer services, but to adaptively relate these websites and computer services to specific television programs. Ultimately, the system gives television viewers easy "push-button" access to websites and computer services that adhere to their preferences, not someone elses.

The embodiments described above are intended only to illustrate and teach one or more ways of practicing or implementing the present invention, not to restrict its breadth or scope. The actual scope of the invention, which encompasses all ways of practicing or implementing the invention, is defined only by the following claims.

## Claims

1. A method of operating a television receiver system (100) having a receiver (120) for receiving a signal that carries a sequence of television programs, a communication device (134) for receiving data from a plurality of remote computer services, a processor (131) for executing an electronic program guide application (133B) and an electronic program guide database (133C, 133D) accessible to the application for storing data identifying at least one of the programs in the database, the method comprising the step of:
storing in each of a plurality of records of the database communications data identifying at least one of the computer services in the database and relational data logically relating the program data to the communications data;
said storing step comprising storing data received from a remote data source and carried by a video signal or as part of a video program;
**characterised in that** the step of storing data further comprises at least one of;
entering an additional number of records, and
an amendment of an existing record, input by the user via an interface device.

2. The method of claim 1, further comprising:
selecting (210) one of the programs;
searching (220) the database for communications data identifying a computer service logically related to the selected one of the programs; and
outputting (240) results of searching the database.

3. A television receiver system (100) having a receiver (120) for receiving a signal that carries a sequence of television programs;
a communication device (134) for receiving data from a plurality of remote computer services;
a processor (131) for executing an electronic program guide application (133B) and an electronic program guide database (133C, 133D) accessible to the application for storing data identifying at least one of the programs in the database;
storing means for storing in each of a plurality of records of the database communications data identifying at least one of the computer services in the database and relational data logically relating the program data to the communications data; and
said storing means being arranged to store data received from a remote data source and carried by a video signal or as part of a video program;
**characterised by** further comprising:
entering means for at least one of entering to the stored data an additional number of records, and
an amendment of an existing record, input by the user via an interface device.

4. The system of claim 3, further comprising:
selecting means for selecting one of the programs;
searching means for searching the database for communications data identifying a computer service logically related to the selected one of the programs; and
outputting means for outputting results of searching the database.

5. The system of claim 3, wherein the data identifying at least one of the computer services identifies at least one website.

6. The system of claim 3, wherein the communications data regarding one or more computer services includes an Internet address or telephone number for at least one of the computer services.

7. The system of claim 3, further comprising:
a display (110) operatively coupled to the database,
wherein the display is operable to display a scheduled program associated with a portion of the program identifying data, and to automatically display a portion of the communications data logically related to the portion of the program identifying data.

8. The system of claim 7, wherein the communications data logically related to the portion of the program identifying data identifies a first computer service, and wherein the communications device is operable to automatically communicate with the first computer service in response to display of the scheduled program.

9. A storage medium storing processor implementable instructions for controlling a processor to carry out the method of any one of claims 1 and 2.

10. A computer program comprising processor implementable instructions for controlling a processor to carry out the method of any one of claims 1 and 2.

## Patentansprüche

1. Verfahren zum Betrieb eines Fernsehempfängersystems (100) mit einem Empfänger (120) zum Empfang eines eine Abfolge von Fernsehprogrammen tragenden Signals, einer Kommunikationsvorrichtung (134) zum Empfangen von Daten von mehreren entfernten Computerdiensten, einem Prozessor (131) zum Ausführen einer elektronischen Programmübersichtsanwendung (133B) und einer elektronischen Programmübersichtsdatenbank (133C, 133D), die der Anwendung zum Speichern von mindestens eines der Programme in der Datenbank identifizierenden Daten zugänglich ist, wobei das Verfahren den folgenden Schritt enthält:
Speichern von mindestens einen der Computerdienste in der Datenbank identifizierenden Kommunikationsdaten und die Programmdaten mit den Kommunikationsdaten logisch in Beziehung setzenden relationalen Daten in jedem von mehreren Datensätzen der Datenbank;
wobei der Speicherschritt das Speichern von Daten enthält, die von einer entfernten Datenquelle empfangen und von einem Videosignal oder als Teil eines Videoprogramms mitgeführt werden,
**dadurch gekennzeichnet, daß** der Schritt des Datenspeicherns ferner mindestens einen der folgenden Schritte enthält:
die Aufnahme einer zusätzlichen Anzahl von Datensätzen; und
die Ergänzung eines bestehenden Datensatzes durch Benutzereingabe über eine Schnittstellenvorrichtung.

2. Verfahren nach Anspruch 1, ferner umfassend
die Auswahl (210) eines der Programme;
die Suche (220) nach Kommunikationsdaten, die einen mit dem ausgewählten Programm logisch in Beziehung stehenden Computerdienst identifizieren, in der Datenbank; und
die Ausgabe (240) der Ergebnisse der Datenbanksuche.

3. Fernsehempfängersystem (100) mit einem Empfänger (120) zum Empfangen eines eine Abfolge von Fernsehprogrammen enthaltenden Signals;
einer Kommunikationsvorrichtung (134) zum Empfangen von Daten von mehreren entfernten Computerdiensten;
einem Prozessor (131) zum Ausführen einer elektronischen Programmübersichtsanwendung (133B) und einer elektronischer Programmübersichtsdatenbank (133C, 133D), die der Anwendung zum Speichern von mindestens eines der Programme in der Datenbank identifizierenden Daten zugänglich ist;
einer Speicherungsvorrichtung zum Speichern von mindestens einen der Computerdienste in der Datenbank identifizierenden Kommunikationsdaten und die Programmdaten mit den Kommunikationsdaten logisch in Beziehung setzenden relationalen Daten in jedem einer Mehrzahl von Datensätzen der Datenbank;
wobei die Speichervorrichtung zum Speichern von Daten, die von einer entfernten Datenquelle empfangen und von einem Videosignal oder als Teil eines Videoprogramms mitgeführt werden, eingerichtet ist;
**gekennzeichnet durch** eine Aufnahmeeinrichtung zur
Aufnahme einer zusätzlichen Anzahl von Datensätzen zu den gespeicherten Daten; und/oder
Ergänzung eines bestehenden Datensatzes **durch** Benutzereingabe über eine Schnittstellenvorrichtung.

4. System nach Anspruch 3, ferner umfassend:
eine Auswahleinrichtung zur Auswahl eines der Programme;
eine Sucheinrichtung zum Suchen nach Kommunikationsdaten, die einen mit dem ausgewählten Programm logisch in Beziehung stehenden Computerdienst identifizieren, in der Datenbank; und
eine Ausgabeeinrichtung zur Ausgabe der Ergebnisse der Datenbanksuche.

5. System nach Anspruch 3, wobei die mindestens einen der Computerdienste identifizierenden Daten mindestens eine Website identifizieren.

6. System nach Anspruch 3, wobei die einen oder mehrere Computerdienste betreffenden Kommunikationsdaten eine Internetadresse oder eine Telefonnummer für mindestens einen der Computerdienste enthalten.

7. System nach Anspruch 3, ferner umfassend:
ein mit der Datenbank funktionell verbundenes Display (110) zur Anzeige eines mit einem Teil der programmidentifizierenden Daten verknüpften Programms und zur automatischen Anzeige eines Teils der mit dem Teil der programmidentifizierenden Daten logisch in Beziehung stehenden Kommunikationsdaten.

8. System nach Anspruch 7, wobei die mit einem Teil der programmidentifizierenden Daten logisch in Beziehung stehenden Kommunikationsdaten einen ersten Computerdienst identifizieren und wobei die Kommunikationsvorrichtung mit dem ersten Computerdienst im Betrieb automatisch in Reaktion auf die Anzeige des vorgesehenen Programms kommuniziert.

9. Speichermedium zum Speichern von prozessorimplementierbaren Anweisungen zur Steuerung eines Prozessors, um das Verfahren nach Anspruch 1 oder 2 auszuführen.

10. Computerprogramm mit prozessorimplementierbaren Anweisungen zur Steuerung eines Prozessors, um das Verfahren nach Anspruch 1 oder 2 auszuführen.

## Revendications

1. Procédé de fonctionnement d'un système de récepteur de télévision (100) possédant un récepteur (120) pour recevoir un signal portant une séquence de programmes de télévision, un dispositif de communication (134) pour recevoir des données à partir d'une pluralité de services informatiques distants, un processeur (131) pour exécuter une application de guide de programme électronique (133B) et une base de données de guide de programme électronique (133C, 133D) accessible à l'application pour stocker des données identifiant au moins un des programmes dans la base de données, le procédé comprenant les étapes consistant à :
stocker dans chacun d'une pluralité d'enregistrements de la base de données des données de communication identifiant au moins un des services informatiques dans la base de données et des données relationnelles reliant logiquement les données de programmes aux données de communication ;
ladite étape de stockage comprenant le stockage de données reçues d'une source de données distante et portées par un signal vidéo ou en tant que partie d'un programme vidéo ;
**caractérisé en ce que** l'étape de stockage de données comprend de plus au moins l'un des items consistant en :
l'entrée d'un nombre supplémentaire d'enregistrements, et
une modification d'un enregistrement existant, entrée par l'utilisateur par l'intermédiaire d'un dispositif d'interface.

2. Procédé selon la revendication 1, comprenant de plus :
la sélection (210) d'un des programmes ;
la recherche (220) dans la base de données de données de communication identifiant un service informatique logiquement relié à celui des programmes qui a été sélectionné ; et
la sortie (240) des résultats de la recherche dans la base de données.

3. Système de récepteur de télévision (100) possédant un récepteur (120) pour recevoir un signal portant une séquence de programmes de télévision ;
un dispositif de communication (134) pour recevoir des données à partir d'une pluralité de services informatiques distants ;
un processeur (131) pour exécuter une application de guide de programme électronique (1338) et une base de données de guide de programme électronique (133C, 133D) accessible à l'application pour stocker des données identifiant au moins un des programmes dans la base de données ;
un moyen de stockage pour stocker dans chacun d'une pluralité d'enregistrements de la base de données des données de communication identifiant au moins un des services informatiques dans la base de données et des données relationnelles reliant logiquement les données de programmes aux données de communication ; et
ledit moyen de stockage étant configuré pour stocker des données reçues d'une source de données distante et portées par un signal vidéo ou en tant que partie d'un programme vidéo ;
**caractérisé en ce qu'**il comprend de plus :
un moyen d'entrée pour entrer dans les données stockées au moins l'un d'un nombre supplémentaire d'enregistrements, et
une modification d'un enregistrement existant, entrée par l'utilisateur par l'intermédiaire d'un dispositif d'interface.

4. Système selon la revendication 3, comprenant de plus :
un moyen de sélection pour sélectionner un des programmes ;
un moyen de recherche pour rechercher dans la base de données des données de communication identifiant un service informatique logiquement relié à celui des programmes qui a été sélectionné ; et
un moyen de sortie pour sortir les résultats de la recherche dans la base de données.

5. Système selon la revendication 3, dans lequel les données identifiant au moins l'un des services informatiques identifie au moins un site web.

6. Système selon la revendication 3, dans lequel les données de communication concernant un ou plusieurs services informatiques comprennent une adresse Internet ou un numéro de téléphone pour au moins l'un des services informatiques.

7. Système selon la revendication 3, comprenant de plus :
un écran (110) relié fonctionnellement à la base de données, dans lequel l'écran est utilisable pour afficher un programme planifié associé à une partie des données identifiant le programme et pour afficher automatiquement une partie des données de communication logiquement reliées à la partie des données identifiant le programme.

8. Système selon la revendication 7, dans lequel les données de communication logiquement reliées à la partie des données identifiant le programme identifient un premier service informatique, et dans lequel le dispositif de communication est utilisable pour communiquer automatiquement avec le premier service informatique en réponse à l'affichage du programme planifié.

9. Support de stockage stockant des instructions exécutables par un processeur pour commander un processeur afin d'exécuter le procédé selon l'une quelconque des revendications 1 et 2.

10. Programme informatique comprenant des instructions exécutables par un processeur pour commander un processeur pour exécuter le procédé selon l'une quelconque des revendications 1 et 2.
